(19)

**Europäisches Patentamt**
**European Patent Office**
**Office européen des brevets**

(11) **EP 4 567 252 A1**

(12) **EUROPEAN PATENT APPLICATION**

(43) Date of publication:
**11.06.2025 Bulletin 2025/24**

(21) Application number: **23307140.6**

(22) Date of filing: **05.12.2023**

(51) International Patent Classification (IPC):
*E21B 43/12* (2006.01)   *G01V 20/00* (2024.01)

(52) Cooperative Patent Classification (CPC):
**E21B 43/12; G01V 20/00;** E21B 2200/20;
G01V 2210/644; G01V 2210/665

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicants:
• **TotalEnergies OneTech**
  **92400 Courbevoie (FR)**
• **CNRS**
  **31055 Toulouse (FR)**

• **Cerfacs**
  **31057 Toulouse Cedex (FR)**

(72) Inventors:
• **Barrela, Eduardo**
  **64018 PAU CEDEX (FR)**
• **Berthet, Philippe**
  **64018 PAU CEDEX (FR)**
• **Thual, Olivier**
  **31057 TOULOUSE (FR)**

(74) Representative: **Plasseraud IP**
  **104 Rue de Richelieu**
  **CS92104**
  **75080 Paris Cedex 02 (FR)**

(54) **METHOD FOR MODELING A GEOBODY IN A RESERVOIR**

(57)    The present disclosure refers to a method for determining a model of a reservoir comprising a geobody capable of conducting a fluid, the method comprising:
- receiving measured production data related to the reservoir;
- receiving a model of the reservoir comprising a discrete representation of a geobody;
- converting the discrete representation of the geobody into a continuous probabilistic representation of the geobody;
- based on a mismatch between production data determined based on the discrete representation of the geobody and the measured production data, updating the continuous probabilistic representation of the geobody in order to reduce the mismatch;
- determining from the updated continuous probabilistic representation of the geobody an updated model of the reservoir comprising an updated discrete representation of the geobody.

FIG. 2

**EP 4 567 252 A1**

## Description

The present disclosure generally belongs to the field of the determination of a geological model of a real subsoil.

More precisely, the present disclosure relates to a method for determining a model of a reservoir comprising a geobody capable of conducting a fluid.

## Background of the disclosure

In order to efficiently extract fluids from a subsoil, it is important to precisely know the properties of the subsoil.

In certain regions of the subsoil, measurements of the subsoil may be available. For example, seismic reflections can be used in these regions to determine the presence of a geobody. In particular, seismic signal amplitude, continuity, and shape of seismic reflections can suggest the presence of a geobody, also providing valuable insights into the geometry and further parameters of the geobody.

Models of the subsoil are useful in many cases, for example for completing partial knowledge of the subsoil.

When building a model of a reservoir, it is crucial to reproduce as precisely as possible the properties of the reservoir, in order to be able to simulate fluid flow in the reservoir and to forecast hydrocarbon production, carbon capture and storage capacities or for groundwater management. Particular attention is paid to geobodies such as channels that may store and transport fluids such as hydrocarbons, water or Carbon Dioxide.

Therefore, a model comprising different types of rock with respective petrophysical properties may be constructed, and uncertainties in the model parameters may be reduced by using measured data as a reference. This process is known as "history matching".

Methods for performing history matching known from prior art are often inaccurate, since they mostly rely on static properties of the reservoir such as properties of the rock (e.g. facies, porosity, permeability), not accounting for uncertainty in geobody location and geometry. Therefore, the resulting model of the reservoir and the forecasted production of fluids are often not correct.

Accordingly, a need exists for a method for properly modeling a geobody in a reservoir.

## Summary

The present disclosure remedies the shortcomings of prior art.

It is disclosed a computer-implemented method for determining a model of a reservoir comprising a geobody capable of conducting a fluid, the method comprising:

- receiving measured production data related to at least one location of the reservoir;
- receiving a model of the reservoir comprising a discrete representation of a geobody capable of conducting a fluid;
- converting the discrete representation of the geobody into a continuous probabilistic representation of the geobody;
- based on a mismatch between production data determined based on the discrete representation of the geobody for said location of the reservoir and the measured production data, updating the continuous probabilistic representation of the geobody in order to reduce the mismatch;
- determining from the updated continuous probabilistic representation of the geobody an updated model of the reservoir comprising an updated discrete representation of the geobody.

The method allows determining an optimized realistic representation of a geobody in a model of a reservoir that is in accordance with measured data. The obtained model may be populated with mechanical-/geological/petrophysical parameters, and may be further submitted to fluid flow simulations.

In particular, based on the obtained model, a flow of a fluid (e.g. hydrocarbons, water or carbon dioxyde) in the reservoir can be simulated and, based on the fluid flow, the production of the fluid may be forecasted.

Therefore, a last part of the method may be to determine a flow of a fluid, based on the updated model comprising an updated discrete representation of the geobody, and output the determined flow for forecasting production of the fluid and/or for future use in geophysical tools (allowing for example the determination of positions where wells for fluid extraction or fluid injection should be drilled).

In an embodiment, the geobody comprises a channel.

In an embodiment, said updating of the continuous probabilistic representation of the geobody is carried out by an ensemble smoother with multiple data assimilation.

In an embodiment, determining an updated discrete representation of the geobody from the updated continuous probabilistic representation of the geobody comprises:

- receiving a plurality of candidate discrete representations of the geobody;
- determining, for each candidate discrete representation of the geobody, a candidate pseudo-geobody representation;
- determining, for said updated continuous probabilistic representation of the geobody, a reference pseudo-geobody representation;
- determining the updated discrete representation of the geobody to be equal to a candidate discrete representation of the geobody among the plurality of candidate discrete representations of the geobody having a candidate pseudo-geobody representation minimizing a metric with respect to the reference pseudo-geobody representation.

In an embodiment, the candidate pseudo-geobody representation is a flow field of the reservoir obtained by simulating a fluid flow in the reservoir based on a respective candidate discrete representation of the geobody, wherein the reference pseudo-geobody representation is a flow field of the reservoir obtained by simulating a fluid flow in the reservoir based on the updated continuous probabilistic representation of the geobody, and wherein the updated discrete representation of the geobody is determined to be equal to a candidate discrete representation of the geobody among the plurality of candidate discrete representations of the geobody having a flow field minimizing a metric with respect to the flow field of the updated continuous probabilistic representation of the geobody.

In another embodiment, determining a candidate pseudo-geobody representation involves determining a plurality of geometrical parameters within a discretized representation of the geobody based on a respective candidate discrete representation of the geobody, and determining a reference pseudo-geobody representation involves determining a plurality of geometrical parameters within a discretized representation of the geobody based on the updated continuous probabilistic representation of the geobody, wherein the updated discrete representation of the geobody is determined to be equal to a candidate discrete representation of the geobody among the plurality of candidate discrete representations of the geobody having a discretized representation with geometrical parameters minimizing a metric with respect to the geometrical parameters of the discretized representation of the updated continuous probabilistic representation of the geobody.

In an embodiment, each discretized representation of the geobody comprises a plurality of cells, and determining a plurality of geometrical parameters comprises computing:

- for cells of a respective discretized representation belonging to the geobody of the respective discretized representation, computing a distance from said cells to a predetermined location in the geobody, in particular to an injector well;
- for cells of a respective discretized representation not belonging to the geobody of the respective discretized representation, computing a distance from said cells to a respective closest location of the geobody.

In an embodiment, the continuous probabilistic representation of the geobody comprises a plurality of cells, each cell comprising a value representative of a probability of having a geobody at a location of the respective cell, wherein the method comprises:

- in the updated continuous probabilistic representation of the geobody, defining regions of cells, and selecting in each region of cells a cell having a maximum value among values of cells in said region of cells, and defining each cell having a maximum value among values of cells in a region of cells as a constraint to be satisfied by the geobody.

In an embodiment, converting the discrete representation of the geobody into a continuous probabilistic representation of the geobody comprises applying a Gaussian filter to the discrete representation of the geobody.

In an embodiment, the discrete representation of the geobody is a binary representation.

In an embodiment, the method comprises at least one iteration of:

- receiving a model of the reservoir comprising a discrete representation of a geobody, wherein the discrete representation of the geobody of a current iteration corresponds to the updated discrete representation of the geobody of a previous iteration;
- converting the discrete representation of the geobody into a continuous probabilistic representation of the geobody;
- based on a mismatch between production data determined based on the discrete representation of the geobody for said location of the reservoir and the measured production data, updating the continuous probabilistic representation of the geobody in order to reduce the mismatch;
- determining from the updated continuous probabilistic representation of the geobody an updated model of the reservoir comprising an updated discrete representation of the geobody.

In an embodiment, the method further comprises:

- receiving a plurality of models of the reservoir, each model of the reservoir comprising a discrete representation of a geobody capable of conducting a fluid;
- converting each discrete representation of the geobody into a continuous probabilistic representation of the geobody;
- based on a respective mismatch between production data determined for a respective discrete representation of the geobody for said location of the reservoir and the measured production data, updating a respective continuous probabilistic representation of the geobody in order to reduce the respective mismatch;
- determining from the updated continuous probabilistic representations of the geobody a plurality of updated models of the reservoir, each updated model of the reservoir comprising anupdated discrete representation.

In an embodiment, each received discrete representation of a geobody among the plurality of received discrete representations is equi-probable.

Another aspect of the present disclosure is related to a computer program product comprising instructions which, when the instructions are executed by a processing circuit, cause the processing circuit to implement a method as described above.

Another aspect of the disclosure is related to a system for determining a model of a reservoir comprising a geobody capable of conducting a fluid, the system comprising:

- a first interface for receiving measured production data related to at least one location of the reservoir;
- a second interface for receiving a model of the reservoir comprising a discrete representation of a geobody capable of conducting a fluid;
- a circuit for converting the discrete representation of the geobody into a continuous probabilistic representation of the geobody;
- a circuit for updating, based on a mismatch between production data determined based on the discrete representation of the geobody for said location of the reservoir and the measured production data, the continuous probabilistic representation of the geobody in order to reduce the mismatch;
- a circuit for determining an updated model of the reservoir comprising an updated discrete representation of the geobody from the updated continuous probabilistic representation of the geobody.

**Brief Description of Drawings**

Other features, details and advantages will be shown in the following detailed description and on the figures, on which:

**Fig. 1**

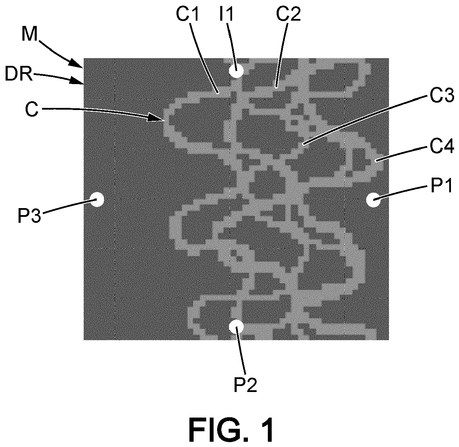

[Fig. 1] is a schematic representation of a geobody capable of conducting a fluid in a model of a reservoir.

**Fig. 2**

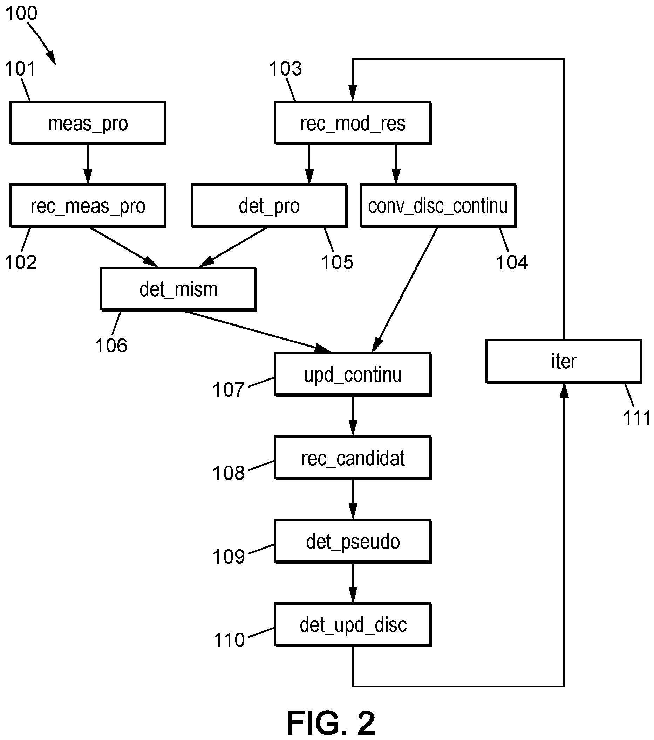

[Fig. 2] is a view of a flowchart of an example of a method for determining a model of a reservoir comprising a geobody as shown in figure 1.

**Fig. 3**

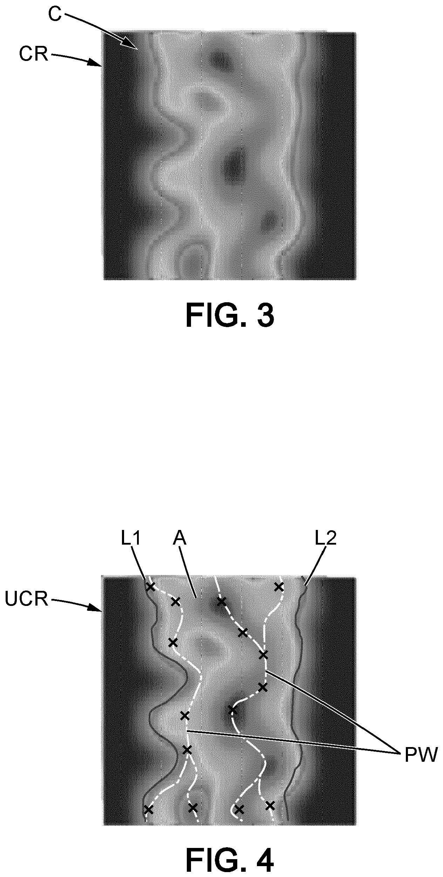

[Fig. 3] shows a continuous probabilistic representation of a geobody determined in the frame of the method whose flowchart is shown in figure 2.

**Fig. 4**

[Fig. 4] shows an updated continuous probabilistic representation determined in the frame of the method whose flowchart is shown in figure 2, wherein cells with high values are selected in different regions of the updated continuous probabilistic representation.

**Fig. 5**

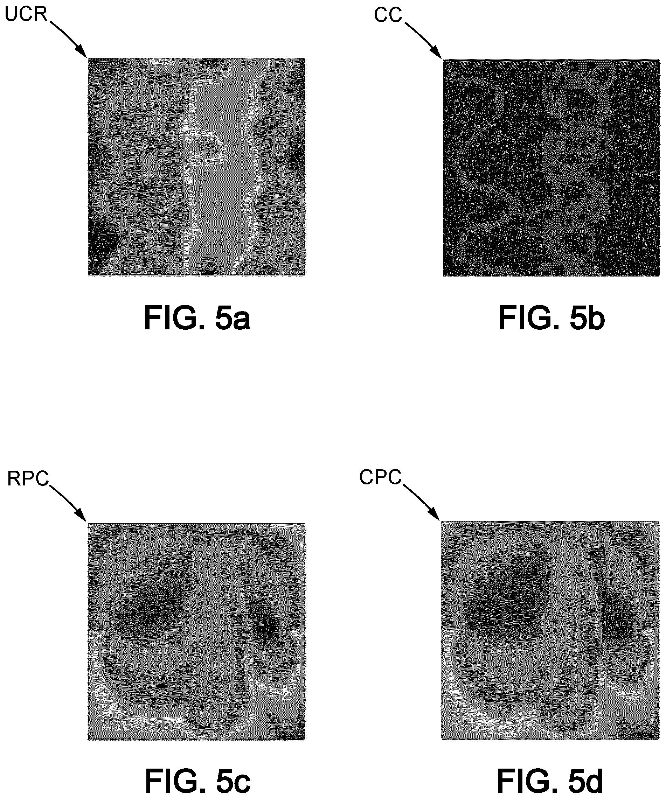

[Fig. 5] shows a) an updated continuous probabilistic representation of a geobody; b) one candidate discrete representation out of many possible candidate discrete representations; c) a reference pseudo-geobody representation in the form of a flow field determined for the updated continuous probabilistic representation of a); and d) a respective candidate pseudo-geobody representation in the form of a flow field determined for the candidate discrete representation of b).

**Fig. 6**

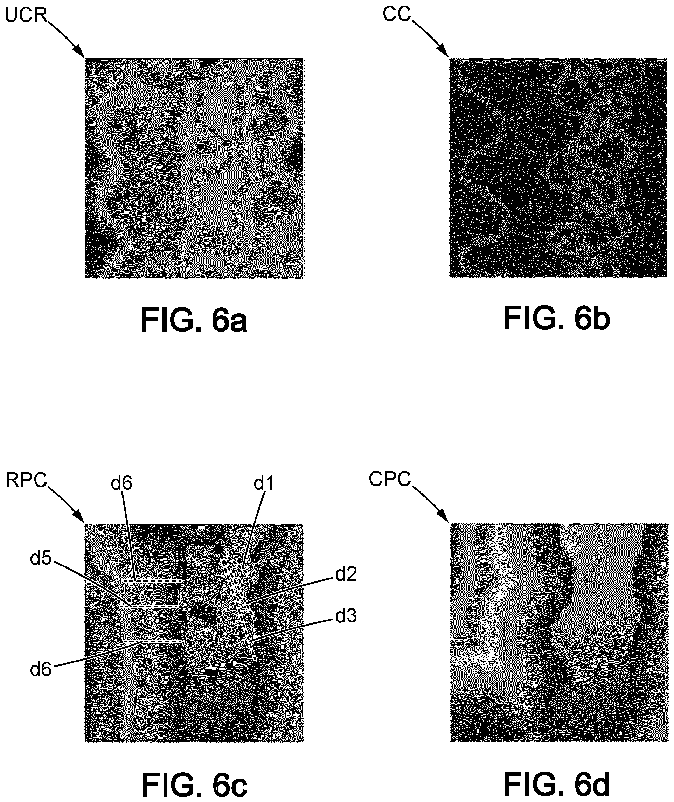

[Fig. 6] shows a) an updated continuous probabilistic representation of a geobody; b) one candidate discrete representation out of many possible candidate discrete representations; c) a reference pseudo-geobody representation comprising geometrical distance computation for the updated continuous probabilistic representation of a); and d) a respective candidate pseudo-geobody representation comprising geometrical distance computation for the candidate discrete representation of b).

**Fig. 7**

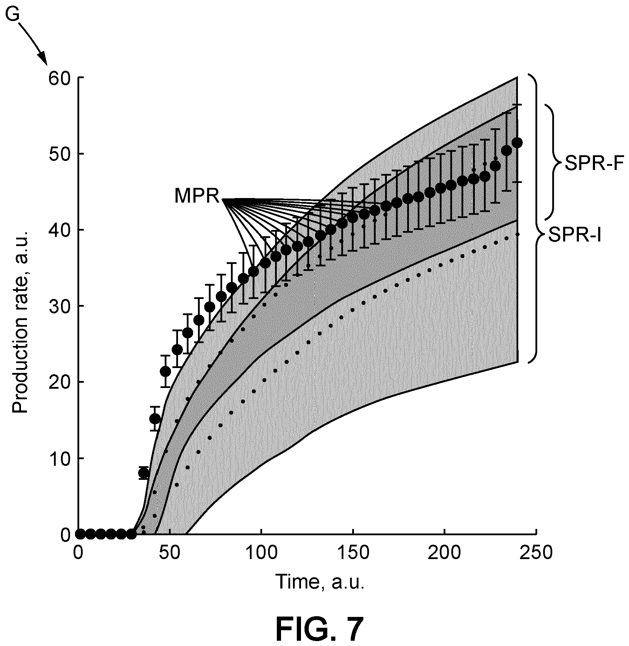

[Fig. 7] is a graph showing a curve of measured production data and curves of production data determined during different iterations of the method whose flow chart is shown in figure 2.

**Fig. 8**

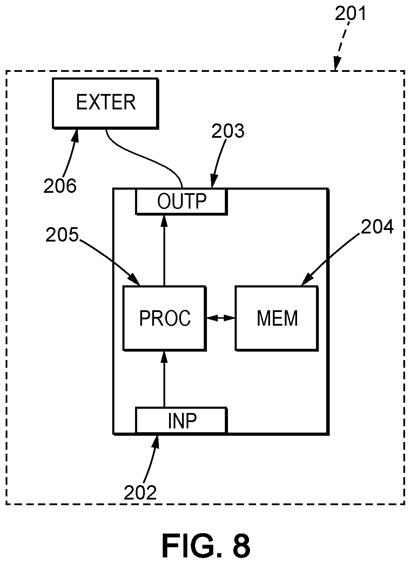

[Fig. 8] shows a system configured to implement a method for determining a model of a reservoir comprising a geobody capable of conducting a fluid whose flowchart is shown in figure 2.

**Description of Embodiments**

In the following, a method for determining a model of a reservoir comprising a geobody capable of conducting a fluid is presented. The method may be implemented according to several embodiments.

There exist several approaches for modeling a reservoir.

In a first approach, geobodies such as levees, lobes and channels may be created, wherein each geobody may be represented by parametric surfaces, in particular by NURBS (or non-uniform Rational B-Splines) surfaces. Different NURBS surfaces may be connected to each other on their respective boundaries in order to provide the shape of a given geobody. A plurality of such geobodies may be assembled to build a model of a reservoir. The resulting model may then be meshed in order to carry out further investigation.

In a second approach, a grid comprising a plurality of cells may be created as a support before the creation of geobodies, and geobodies may then be created directly on the grid.

Such an approach is known from EP 2 956 804 A1 which discloses a method for modeling a reservoir in which a grid of cells is provided. Initially, the parameters of only a small number of cells will be known (those which have been actually measured) and assumed values are used for the parameters of the other cells.

In this second approach, sediment transportation paths may be simulated, which may correspond to computing trajectories based on a random walk approach as discussed in EP 2 880 471 A1. The trajectories may then be dressed with parametric surfaces in order to generate the geobodies.

In any of these approaches for modeling a reservoir, the geobodies may be created in such a way that they are in accordance with measured data obtained from the reservoir. For example, the measured data may be petro-elastic parameters (e.g. rock density or acoustic wave propagation velocity) or rock-physics parameters (e.g. porosity, permeability, fluid saturation, pressure or temperature) from which the petro-elastic parameters may be determined.

In order to obtain the measured data, wells may be drilled into the subsoil comprising the reservoir, and measurements of different parameters may be carried out at the location of the wells. In particular, it may be determined whether a geobody passes through the location of a respective well or not. In addition, no flow-regions may be determined, i.e. regions where for example levees are present and where no fluid flow is possible.

The measured data may be considered as constraints that the model of the reservoir should respect. The calibration of the reservoir model using the measured data is referred to as history matching.

Figure 1 shows an example of a reservoir model M, comprising a discrete representation DR of a geobody. In this example, the geobody represents a channelized structure that may comprise a plurality of sub-channels C1, C2, C3, C4.

An injector well I1 and producer wells P1, P2, P3 may be spread across the reservoir and be located on the geobody C. Production of a fluid such as hydrocarbons or groundwater may be undertaken by the producer wells P1, P2, P3. The injector well I1 is included to assist production by injecting fluids, e.g. water, carbon dioxide into the reservoir, helping to maintain reservoir pressure and to promote efficient extraction of the fluid throughout the reservoir.

In order for the model M to be able to correctly represent the fluid flow in the reservoir and to forecast production of fluids through the wells, the model M needs to be accurate and consistent with measured data. Therefore, the model M may be refined by using measured production data, including well and 4D -or time-lapse- seismic data, as a reference for history matching. These production data may be data related to the production of a fluid from the producer wells P1, P2, P3. For example, the production data may be a production rate of a fluid (indicated for example in $m^3/s$).

The model M may be calibrated in such a way that the production data simulated for the model M are in accordance with the measured production data. In order to calibrate the model M on the measured production data, the geometry and the location of the geobody C may be used as variable parameters for tuning the production data simulated for the model M. Further variable parameters that may be used in order to calibrate the model M are petrophysical data, the geobody proportions in the model M (i.e. the percentage of the discrete representation DR that is occupied by the geobody), and other metadata parameters such as amplitude, depth, width or frequency of the geobody.

When optimizing the geometry and the location of the geobody C, the constraints mentioned above should be respected, i.e. in the model M no geobody should pass through no-flow regions and the geobody C should pass through locations where a geobody had been detected by measurements in the wells.

Figure 2 shows a flowchart of a method 100 for determining a model M of a reservoir comprising a geobody C. In the method 100, the location and the geometry of the geobody C may be optimized iteratively.

In the first iteration of the method 100, production data related to at least one location of the producer wells P1, P2, P3 may be measured 101 by use of one or more sensors. The measured production data are also referred to as ground truth.

All further parts of the method 100 described hereafter may be implemented by a system 201 such as a computer (that will be described further in relation to figure 8).

The measured production data may be received 102 as input data of the system 201.

Furthermore, a model M of the reservoir comprising a plurality of cells and a discrete representation DR of the geobody C as shown in figure 1 is received 103. The discrete representation DR may be a binary representation. For example, a value of a cell of the discrete representation DR may be equal to 0 if no geobody is present at the location of the cell and equal to 1 if a geobody C is present at the location of the cell.

The discrete representation DR may then be converted 104 into a continuous probabilistic representation CR of the geobody C as shown in figure 3. This may be done by applying Gaussian filtering or another filtering technique to the discrete representation DR.

Each cell of the continuous probabilistic representation CR indicates a probability for finding the geobody C at a respective location represented by the cell. For example, the probability may be equal to 0 in the no-flow regions and equal to 1 at cells representative of locations where the geobody C has been found by measurements.

There may be a plurality of possible discrete representations DR that are consistent with the continuous probabilistic representation CR.

The continuous probabilistic representation CR may then be updated by calibrating it on measured production data.

Therefore, production data may be determined 105 for said location of the reservoir, based on the original discrete representation DR. Indeed, different possible discrete representations DR with different locations and geometries of the geobody C will result in different production data.

In order to determine 105 the production data, full-physics simulations based on Darcy flow assumptions using Darcy's equation are carried out. Therefore, an industry standard flow simulator may be employed (Eclipse, Intersect, IMEX, Nexus, tNavigator, MoReS, etc). Darcy's equation is often used in the form of a partial differential equation, wherein the so-called Darcy velocity u is determined: $u = -\frac{k}{\mu}\frac{\partial P}{\partial x}$ , where P is the pressure in the geobody and x is an axis oriented along the length of the geobody, $\mu$ is the dynamic viscosity of the fluid which portrays its resistance to flow, and k is the permeability of the geobody.

A mismatch between the determined production data and the measured production data may then be determined 106.

For example, the mismatch may be determined 106 from a difference between a curve representing a measured production rate of a fluid and a curve representing the simulated production rate of the fluid. An example of such curves is shown in figure 7 and will be discussed later.

Based on the mismatch, the continuous probabilistic representation CR is updated 107, in such a way that the mismatch is reduced.

The updating 107 of the continuous probabilistic representation CR may be carried out by use of different tools such as an ensemble smoother, an ensemble Kalman filter, an iterative ensemble smoother or an ensemble smoother with multiple data assimilation, referred to as ES-MDA.

In ES-MDA, all available data (i.e. on the one hand the measured production data and on the other hand parameters of the model M) are assimilated multiple times using an inflated covariance matrix with an inflation factor. ES-MDA is an iterative approach to the ensemble smoother, which allows obtaining better history match results when compared to an ensemble smoother without multiple data assimilation.

ES-MDA allows updating 107 the continuous probabilistic representation CR and thus allows for an effective history matching process that captures flow dynamics in the reservoir. The updated continuous probabilistic representation inherently captures information pertaining to the most probable location and geometry of the geobody.

For further details regarding the concept of ES-MDA, it is referred to A. Emerick et al., "Ensemble smoother with multiple data assimilation", Computers & Geosciences, 55:3-15, 2013.

The updated continuous probabilistic representations may be analyzed to identify and select cells exhibiting the highest values in different regions of the updated continuous probabilistic representation. These selected cells may then be considered as constraints for the geobody, i.e. any discrete representation of a geobody determined from the updated continuous probabilistic representation should then comprise these cells.

One example of selecting cells exhibiting the highest values in different regions is discussed in relation to figure 4. In the updated continuous probabilistic representation UCR of figure 4, an area A comprising cells with a high probability value may be determined. For example, this area A may comprise cells with a value above a predetermined threshold. Alternatively, this area A may be determined by a method referred to as "kmeans". In figure 4, this area A is delimited by lines L1, L2.

A moving window may be applied on the updated continuous probabilistic representation UCR. The window may be a predefined stencil with predefined dimensions. In the present non-limiting example, the step size of the moving window may have the same width as the stencil.

For example, for an updated continuous probabilistic representation UCR having a size of 100x100m and for a stencil having a size of 20mx20m, the updated continuous probabilistic representation UCR will be subdivided into 25 zones and the moving window will make 25 steps. For each of these cells, the cell having the highest value may be identified. In figure 4, 17 zones among the 25 zones are at least partially within the determined area A. Therefore, 17 cells are selected, i.e. one cell having the highest value in each of the 17 zones. The selected cells are represented as "x" in figure 4.

These selected cells will then be considered as constraints to be satisfied by all possible discrete representations that may be determined from the updated continuous probabilistic representation UCR. Any updated discrete representation of a geobody that is consistent with the updated continuous probabilistic representation UCR has to pass through these cells having the highest values. Thus, it is ensured that these selected cells representing constraints are spatially distributed and do not aggregate, thereby avoiding over-concentration of cells having the highest values in any region of the updated continuous probabilistic representation UCR and leading to a more realistic and balanced representation of geobody locations. Several potential pathways PW of the geobody C are indicated in figure 4.

The number of updated discrete representations of a geobody that are consistent with the updated continuous probabilistic representation UCR is narrowed by these additional constraints.

Next, the "best" updated discrete representation of the geobody C consistent with the updated continuous probabilistic representation UCR may be determined.

Therefore, a plurality of candidate discrete representations of the geobody may be received 108, as will be discussed in relation to figures 5 and 6.

Figures 5a and 6a show an updated continuous probabilistic representation UCR of a geobody. For this updated continuous probabilistic representation UCR, a plurality of equi-probable candidate discrete representations may be determined that are all in accordance with the updated continuous probabilistic representation UCR. An example of a candidate discrete representation CC is shown in figures 5b and 6b.

The objective is then to find, among the plurality of equi-probable candidate discrete representations, the "best" candidate discrete representation CC.

Therefore, in a first example discussed in relation to figure 5, flow diagnostics may be carried out. Flow diagnostics involves determining flow fields for the different representations of the geobodies. A simulation of flow fields allows studying the fluid flow fast and efficiently, in particular when compared to a full-physics simulation. Further details on flow diagnostics are available in the textbook by K. A. Lie, "An introduction to reservoir simulation using MATLAB/GNU Octave: User guide for the MATLAB Reservoir Simulation Toolbox (MRST). Cambridge University Press, 2019.

A flow field may be determined for the updated continuous probabilistic representation of figure 5a and for all candidate discrete representations.

Figure 5c shows a flow field determined 109 for the updated continuous probabilistic representation UCR of figure 5a, referred to as reference flow field (or more generally as reference pseudo-geobody representation RPC). In order to determine the flow field, the updated continuous probabilistic representation UCR may first be discretized by "kmeans", and the flow field may then determined based on the discretized representation.

Figure 5d shows a flow field determined 109 for the candidate discrete representation CC of figure 5b, referred to as candidate flow field (or more generally as candidate pseudo-geobody representation CPC). More precisely, a Gaussian filter (or any other adapted filter) may be applied to the candidate discrete representation CC before calculating the flow field, in order to ensure an equal comparison point in terms of spatial continuity between the updated continuous probabilistic representation UCR and the respective candidate discrete representation CC. The filtered updated continuous probabilistic representation may then be discretized by "kmeans", and the candidate flow field may be determined based on the discretized representation.

The two flow fields of figures 5c and figures 5d may then be compared in order to quantify the similarity between both flow fields. The comparison may involve determining a metric, such as point-to-point Euclidean distances between both flow fields.

The candidate discrete representation CC whose candidate flow field minimizes the metric with respect to the reference flow field may then be picked and be defined as an updated discrete representation. Thus, an updated model M comprising the updated discrete representation may be determined 110.

In a second example discussed in relation to figure 6, geometrical parameters are determined in order to quantify the similarity between geobodies.

Geometrical parameters are computed for the updated continuous probabilistic representation UCR of figure 6a and for all candidate discrete representations.

Figure 6c shows geometrical parameters determined for the updated continuous probabilistic representation of figure 6a which has been discretized by "kmeans". The representation in figure 6c may generally be referred to as reference pseudo-geobody representation RPC.

Figure 6d shows geometrical parameters determined 109 for the candidate discrete representations shown in figure 6b, to which a Gaussian filter (or any other adapted filter) has been applied and which has then be discretized by "kmeans". The representation in figure 6d may generally be referred to as candidate pseudo-geobody representation CPC.

The determination of geometrical parameters may comprise computing, for cells belonging to the geobody, distances $d1$, $d2$, $d3$ from said cells to a predetermined location in the geobody, in particular to an injector well. For example, these distances may be geodesic distances.

The determination of geometrical parameters may further comprise computing, for cells not belonging to the geobody, distances $d4$, $d5$, $d6$ from said cells to a respective closest location of the geobody. For example, these distances may be Hausdorff distances.

The distance calculations of figures 6c and figures 6d may then be compared in order to quantify the similarity between both flow fields. The comparison may involve determining a metric, such as point-to-point Euclidean between each of the candidate pseudo-geobody representations and the reference pseudo-geobody representation RPC.

The candidate discrete representation CC among the plurality of candidate discrete representations whose candidate pseudo-geobody representation minimizes the metric with respect to the reference pseudo-geobody representation RPC may be picked and be defined as the updated discrete representation.

Based on the updated discrete representation, an updated model M is determined 110.

The updated model M received as an output of the first iteration of the method 100 represents an improvement with respect to the model M received as an input of the first iteration, meaning that the updated discrete representation of the model M received as an output is a more realistic representation of the model M received as an input, that is in better accordance with the measured data.

The updated model M comprising the updated discrete representation received as an output of the first iteration may then be received 103 as input model M in the second iteration.

The above-mentioned portions 104 - 110 of the method 100 may be repeated in the second iteration, in order to determine an updated discrete representation as an output of the second iteration.

The method 100 may be iterated 111 until a predetermined stop criterion is reached. The stop criterion may be selected for instance among the following examples:

- the iterations are stopped after a determined number of iterations;
- the iterations are stopped once a sufficient convergence has been achieved, i.e. for instance when a mismatch value between measured production data and simulated production data becomes lower than a predetermined threshold.

In each iteration, it is expected that the simulated production data converge towards the measured production data, and that the updated model is a more realistic representation of the reservoir when compared to the initial model M.

A plurality of such simulations may be made in parallel.

This means that in the first iteration, a plurality of models M each comprising a discrete representation DR of the geobody as shown in figure 1 is received 103. All of these discrete representations DR may be equi-probable, meaning that they all honour the constraints (such as the measured data) and that they may occur with the same probability.

For each received discrete representation DR, the above-mentioned portions 104 - 110 of the method 100 may be carried out.

Thus, each model is optimized iteratively, and the plurality of optimized models may be output, for example on a computer screen. The model that best fits the measured production data may be picked for simulating fluid flow in the reservoir.

Carrying out parallel simulations with equi-probable representations also allows observing a general trend during the simulation. For example, the different discrete representations DR may exhibit considerable differences at the beginning, but these differences may be smoothed out with an increasing number of iterations, and all discrete representations may converge. The output of the method 100 may be a plurality of discrete representations whose spread offers insights into the most probable locations of geobodies.

Figure 7 is a graph G showing a plurality of curves of production data SPR-I determined for a plurality of initial discrete representations DR of a geobody C (i.e. as received in the first iteration) and a plurality of curves of production data SPR-F determined for a plurality of final updated discrete representations of a geobody C (i.e. as output by the final iteration) of the method 100 discussed in relation to figure 2, and further a curve of measured production data MPR (represented by whisker bars). With increasing number of iterations, the simulated production data converge towards the measured production data MPR. Furthermore, the spread of the different discrete representations considerably narrows by the final iteration, closely aligning with the measured production data MPR.

The different parts of the method 100 are not necessarily carried out in the indicated order. For example, the model M may be received 103 before the measured production data are received 102.

The optimized models M comprising an optimized discrete representation of the last iteration may be populated with mechanical/geological/petrophysical parameters, and may be further submitted to fluid flow simulations.

Based on the optimized model M, further simulations may be carried out to forecast future fluid flow in the reservoir and future production of fluids through producer wells in the reservoir.

The forecasted fluid flow in the reservoir and the forecasted production of fluids may be used for future use in geophysical tools. In particular, the forecasted fluid flow may allow determining a positions of wells to be drilled for operating the reservoir, in particular producer wells for fluid extraction or injector wells for fluid injection. For example, a producer well may be planned and drilled at a location where the output of the method 100 indicates highest probability of geobody occurrence on previously undrilled locations or in regions remaining stored fluids which may be, for example, deemed viable for exploitation.

Figure 8 shows a system 201 configured to implement at least a part of the method 100 described in relation to figure 2, in particular the parts 102 - 111 of the method 100 other than the measurement 101 of production data.

The system 201 may comprise a memory 204 for storing instructions for implementation of at least part of the method 100, the data received, and temporary data for performing the various blocks and operations of the method 100.

The system 201 further comprises a processing circuit 205. This processing circuit 205 can be, for example: a processor capable of interpreting instructions in the form of a computer program, or an electronic card whose blocks and operations of the method 100 are described in silicon, or a programmable electronic chip such as an FPGA for "Field-Programmable Gate Array", as a SOC for "System On Chip" or as an ASIC for "Application Specific Integrated Circuit".

SOCs or systems-on-chips are embedded systems that integrate all the components of an electronic system into a single chip. An ASIC is a dedicated electronic circuit that brings together custom features for a given application. The programmable logic circuits of the FPGA type are electronic circuits reconfigurable by the user of the system 201.

The system 201 comprises an input interface 202 for receiving messages or instructions, and an output interface 203 for communication with the electronic entities of the system 201 which implement the method 100 according to the present disclosure.

Depending on the embodiment, the system 201 may be a computer, a computer network, an electronic component, or another device comprising a processor operatively coupled to a memory 204, and, depending on the mode of operation, a data storage unit, and other associated hardware elements such as a network interface and a media reader for reading a removable storage medium 206 and writing on such a medium. The removable storage medium 206 may be, for example, a flash disk, a USB stick, etc.

According to the embodiment, the memory 204, the data storage unit or the removable storage medium 206 contains instructions which, when executed by the processor, cause this system 201 to performing or controlling the input interface 202, output interface 203, data storage in the memory 204 and / or data processing and described method implementation examples.

In addition, the instructions can be implemented in software form, in which case they take the form of a program executable by a processor, or in hardware form, as an integrated circuit specific application ASIC, a SOC on a microchip, or in the form of a combination of hardware and software elements, for example a software program intended to be loaded and executed on an electronic component described above such as FPGA processor.

The system 201 can also use hybrid architectures, for example architectures based on a CPU + FPGA, or an MPPA for "Multi-Purpose Processor Array".

**Claims**

1. A computer-implemented method for determining a model (M) of a reservoir comprising a geobody (C) capable of conducting a fluid, the method comprising:

   - receiving (102) measured production data related to at least one location of the reservoir;
   - receiving (103) a model (M) of the reservoir comprising a discrete representation (DR) of a geobody (C) capable of conducting a fluid;
   - converting (104) the discrete representation (DR) of the geobody (C) into a continuous probabilistic representation (CR) of the geobody (C);

   - based on a mismatch between production data determined (105) based on the discrete representation (DR) of the geobody (C) for said location of the reservoir and the measured production data, updating (107) the continuous probabilistic representation (CR) of the geobody (C) in order to reduce the mismatch;
   - determining (110) from the updated continuous probabilistic representation (UCR) of the geobody (C) an updated model (M) of the reservoir comprising an updated discrete representation of the geobody (C).

2. The method of claim 1, wherein the geobody (C) comprises a channel.

3. The method of any one of the previous claims, wherein said updating (107) of the continuous probabilistic representation (CR) of the geobody (C) is carried out by an ensemble smoother with multiple data assimilation.

4. The method of any one of the previous claims, wherein determining an updated discrete representation of the geobody (C) from the updated continuous probabilistic representation (UCR) of the geobody (C) comprises:

   - receiving (108) a plurality of candidate discrete representations of the geobody (C);
   - determining (109), for each candidate discrete representation of the geobody (C), a candidate pseudo-geobody representation (CPC);
   - determining (109), for said updated continuous probabilistic representation (UCR) of the geobody (C), a reference pseudo-geobody representation (RPC);
   - determining the updated discrete representation of the geobody (C) to be equal to a candidate discrete representation (CC) of the geobody (C) among the plurality of candidate discrete representations of the geobody (C) having a candidate pseudo-geobody representation (CPC) minimizing a metric with respect to the reference pseudo-geobody representation (RPC).

5. The method according to claim 4, wherein the candidate pseudo-geobody representation (CPC) is a flow field of the reservoir obtained by simulating a fluid flow in the reservoir based on a respective candidate discrete representation of the geobody (C), and wherein the reference pseudo-geobody representation (RPC) is a flow field of the reservoir obtained by simulating a fluid flow in the reservoir based on the updated continuous probabilistic representation (UCR) of the geobody (C), and wherein the updated discrete representation of the geobody (C) is determined to be equal to a candidate discrete representation (CC) of the geobody (C) among the plurality of candidate discrete representations of the geobody (C) having a flow field minimizing a metric with respect to the flow field of the updated continuous probabilistic representation (UCR) of the geobody (C).

6. The method of claim 4, wherein determining (109) a candidate pseudo-geobody representation (CPC) involves determining a plurality of geometrical parameters within a discretized representation of the geobody (C) based on a respective candidate discrete representation of the geobody (C), and determining (109) a reference pseudo-geobody representation (RPC) involves determining a plurality of geometrical parameters within a discretized representation of the geobody (C) based on the updated continuous probabilistic representation (UCR) of the geobody (C), and wherein the updated discrete representation of the geobody (C) is determined to be equal to a candidate discrete representation (CC) of the geobody (C) among the plurality of candidate discrete representations of the geobody (C) having a discretized representation with geometrical parameters minimizing a metric with respect to the geometrical parameters of the discretized representation of the updated continuous probabilistic representation (UCR) of the geobody (C).

7. The method of claim 6, wherein each discretized representation of the geobody (C) comprises a plurality of cells, and determining a plurality of geometrical parameters comprises computing:

    - for cells of a respective discretized representation belonging to the geobody (C) of the respective discretized representation, computing a distance from said cells to a predetermined location in the geobody (C), in particular to an injector well;
    - for cells of a respective discretized representation not belonging to the geobody (C) of the respective discretized representation, computing a distance from said cells to a respective closest location of the geobody (C).

8. The method of any one of the previous claims, wherein the continuous probabilistic representation (CR) of the geobody (C) comprises a plurality of cells, each cell comprising a value representative of a probability of having a geobody (C) at a location of the respective cell, wherein the method comprises:

    - in the updated continuous probabilistic representation (UCR) of the geobody (C), defining regions of cells, and selecting in each region of cells a cell having a maximum value among values of cells in said region of cells, and defining each cell having a maximum value among values of cells in a region of cells as a constraint to be satisfied by the geobody (C).

9. The method of any one of the previous claims, wherein converting (104) the discrete representation (DR) of the geobody (C) into a continuous probabilistic representation (CR) of the geobody (C) comprises applying a Gaussian filter to the discrete representation (DR) of the geobody (C).

10. The method of any one of the previous claims, wherein the discrete (DR) representation of the geobody (C) is a binary representation.

11. The method of any one of the previous claims, comprising at least one iteration of:

    - receiving (103) a model (M) of the reservoir comprising a discrete representation (DR) of a geobody (C), wherein the discrete representation (DR) of the geobody (C) of a current iteration corresponds to the updated discrete representation of the geobody (C) of a previous iteration;
    - converting (104) the discrete representation (DR) of the geobody (C) into a continuous probabilistic representation (CR) of the geobody (C);
    - based on a mismatch between production data determined (105) based on the discrete representation (DR) of the geobody (C) for said location of the reservoir and the measured production data, updating (107) the continuous probabilistic representation (CR) of the geobody (C) in order to reduce the mismatch;
    - determining (110) from the updated continuous probabilistic representation (UCR) of the geobody (C) an updated model (M) of the reservoir comprising an updated discrete representation of the geobody (C).

12. The method of any one of the previous claims, further comprising:

    - receiving (103) a plurality of models (M) of the reservoir, each model (M) of the reservoir comprising a discrete representation (DR) of a geobody (C) capable of conducting a fluid;
    - converting (104) each discrete representation (DR) of the geobody (C) into a continuous probabilistic representation (CR) of the geobody (C);
    - based on a respective mismatch between production data determined (105) for a respective discrete representation (DR) of the geobody (C) for said location of the reservoir and the measured production data, updating (107) a respective continuous probabilistic representation (CR) of the geobody (C) in order to reduce the respective mismatch;

- determining (110) from the updated continuous probabilistic representations (UCR) of the geobody (C) a plurality of updated models (M) of the reservoir, each updated model (M) of the reservoir comprising an updated discrete representation.

13. The method of claim 12, wherein each received discrete representation (DR) of a geobody (C) among the plurality of received discrete representations (DR) is equi-probable.

14. A computer program product comprising instructions which, when the instructions are executed by a processing circuit (205), cause the processing circuit (205) to implement a method of any one of claims 1-13.

15. A system (201) for determining a model (M) of a reservoir comprising a geobody (C) capable of conducting a fluid, the system comprising:

- a first interface for receiving (102) measured production data related to at least one location of the reservoir;
- a second interface for receiving (103) a model (M) of the reservoir comprising a discrete representation (DR) of a geobody (C) capable of conducting a fluid;
- a circuit for converting (104) the discrete representation (DR) of the geobody (C) into a continuous probabilistic representation (CR) of the geobody (C);
- a circuit for updating (107), based on a mismatch between production data determined (105) based on the discrete representation (DR) of the geobody (C) for said location of the reservoir and the measured production data, the continuous probabilistic representation (CR) of the geobody (C) in order to reduce the mismatch;
- a circuit for determining (110) an updated model (M) of the reservoir comprising an updated discrete representation of the geobody (C) from the updated continuous probabilistic representation (UCR) of the geobody (C).

FIG. 1

100

101

| meas_pro | | rec_mod_res |
103

| rec_meas_pro | | det_pro | | conv_disc_continu |

102 105 104

| det_mism |

106

| upd_continu | | iter |

107 111

| rec_candidat |

108

| det_pseudo |

109

| det_upd_disc |

110

# FIG. 2

FIG. 3

FIG. 4

UCR

## FIG. 5a

CC

## FIG. 5b

RPC

## FIG. 5c

CPC

## FIG. 5d

UCR

FIG. 6a

CC

FIG. 6b

RPC    d6        d1

d5

d2

d3

d6

FIG. 6c

CPC

FIG. 6d

FIG. 7

FIG. 8

Europäisches
Patentamt

European
Patent Office

Office européen
des brevets

# EUROPEAN SEARCH REPORT

**Application Number**

EP 23 30 7140

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | LEE KYUNGBOOK ET AL: "Ensemble smoother with clustered covariance for 3D channelized reservoirs with geological uncertainty", JOURNAL OF PETROLEUM SCIENCE AND ENGINEERING, ELSEVIER, AMSTERDAM, NL, vol. 145, 25 May 2016 (2016-05-25), pages 423-435, XP029672050, ISSN: 0920-4105, DOI: 10.1016/J.PETROL.2016.05.029 * figure 2 * * figures 1,4,5,11,14-16 * * the whole document * | 1-15 | INV. E21B43/12 G01V20/00 |
| X | BARRELA E. ET AL: "4D history matching using ESMDA and flow-based distance-to-front measurement", 84TH EAGE ANNUAL CONFERENCE & EXHIBITION, 30 June 2023 (2023-06-30), pages 1-5, XP093148144, DOI: 10.3997/2214-4609.202310911 Retrieved from the Internet: URL:https://www.earthdoc.org/docserver/fulltext/2214-4609/2023/eageannual2023/911.pdf> * figures 2,4 * * the whole document * | 1 | |

TECHNICAL FIELDS
SEARCHED      (IPC)

E21B
G01V

-/--

The present search report has been drawn up for all claims

| Place of search | Date of completion of the search | Examiner |
|---|---|---|
| The Hague | 5 April 2024 | van Berlo, André |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

page 1 of 2

Europäisches
Patentamt

European
Patent Office

Office européen
des brevets

# EUROPEAN SEARCH REPORT

**Application Number**

EP 23 30 7140

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | Gonçalo Figueiredo Da Silva Freitas Ferreira: "Rule-based modeling of turbiditic channel environmentsconstrained with 3D and 4D seismic and well data", , 30 October 2022 (2022-10-30), XP093148118, Retrieved from the Internet: URL:fenix.tecnico.ulisboa.pt [retrieved on 2024-04-04] * page 21, paragraph 3; figure 2 * * paragraphs [03.3] – [03.5]; figures 5-8 * * page 23 * * the whole document * ----- | 1 | |
| A | RAVANELLI FABIO ET AL: "History Matching a Gas Reservoir Using Ensemble Based Methods", ALL DAYS, 23 April 2018 (2018-04-23), XP093148158, DOI: 10.2118/192293-MS Retrieved from the Internet: URL:https://watermark.silverchair.com/spe-192293-ms.pdf> * ensemble based history matching; the whole document * ----- | 3 | TECHNICAL FIELDS SEARCHED (IPC) |

The present search report has been drawn up for all claims

| Place of search | Date of completion of the search | Examiner |
|---|---|---|
| The Hague | 5 April 2024 | van Berlo, André |

EPO FORM 1503 03.82 (P04C01)

page 2 of 2

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2956804 A1

- EP 2880471 A1

**Non-patent literature cited in the description**

- **A. EMERICK et al.** Ensemble smoother with multiple data assimilation. *Computers & Geosciences*, 2013, vol. 55, 3-15

- **K. A. LIE**. An introduction to reservoir simulation using MATLAB/GNU Octave: User guide for the MATLAB Reservoir Simulation Toolbox (MRST). Cambridge University Press, 2019